# EUROPEAN PATENT SPECIFICATION

(11) **EP 1 037 135 B1**
(45) Date of publication and mention of the grant of the patent: **29.06.2011**
(21) Application number: 00105855.1
(22) Date of filing: 20.03.2000
(51) Int. Cl.: G06F 3/033

(54) **Method of processing user information inputted through touch screen panel of a digital mobile station**
Verarbeitungsverfahren der durch einen Benutzer eingebenen Information auf den berührungsempfindlichen Bildschirm einer digitalen Mobilstation
Méthode de traitement de l'information introduite par un utilisateur à l'aide de l'écran tactile d'une station mobile numérique

(30) Priority: 18.03.1999 KR 9909273
(43) Date of publication of application: 20.09.2000
(73) Proprietor: SAMSUNG ELECTRONICS CO., LTD., Suwon-City, Kyungki-do (KR)
(72) Inventor: Sim, Seng-Wook, Suwon-shi, Kyonggi-do (KR); Lee, Yong-Jin, Seoul (KR)
(74) Representative: Grünecker, Kinkeldey, Stockmair & Schwanhäusser Anwaltssozietät

(56) References cited:
- EP-A- 0 738 951
- EP-A- 0 762 265
- WO-A-95/25326
- WO-A-98/53389
- US-A- 5 404 458
- US-A- 5 838 302

## Description

### BACKGROUND OF THE INVENTION

### 1. Field of the Invention

The present invention relates to a method of processing user information inputted in a digital mobile station, and more particularly to a method of inputting and processing a variety of user information such as a written memo which can be inputted through a touch screen panel (TSP) included in the digital mobile station.

### 2. Description of the Related Art

Currently, as use of a digital mobile station (also called "digital portable terminal") is popularized and the technological development of the digital mobile station follows a trend toward high-performance as an information processing apparatus, several diversified methods for processing a user's inputted information have been proposed and implemented. These methods are proposed to enable a user to more easily use several useful functions including a phone-book function, a short message-drawing function, and electronic pocketbook function, etc., implemented in the digital mobile station. Among these methods, as usually used methods, there are a method that allows necessary user information to be inputted through a key input section, i.e. a key panel included in the digital mobile station, or a method in which recognition of a user's voice allows user information to be inputted in the digital mobile station, etc. However, the above methods have a limitation in that since a predetermined type of information (for example, a set of characters and numerals) stored previously in a memory of the digital mobile station is read out and processed therefrom through such an information-input way as manipulation of the key input section or the recognition of a user's voice, the methods act as only a user information-inputting function of a uniform type. That is, in a case of such information-input way as the manipulation of the key panel, when a user performs the keying-in operation of certain keys arranged on the key panel, a predetermined function is executed or an input of information is completed accordingly. Also, in a case of such information-input way as the recognition of a user's voice, when a user speaks to a microphone of the digital mobile station, a voice of the user is recognized so that a predetermined function is executed or an input of information is completed accordingly. In consequence, the input of user information is performed uniformly, but not diversely within the limit of items of predetermined information. As an example, a user may desire to input writing information written by or picture information drawn by the user in person, which can represent an inherent feature of the user himself other than the above predetermined type of information, so that an information-processing operation according to this information-inputting way can be performed. But, the above conventional user information-inputting methods make it impossible to perform such diverse types of user information inputting and processing operations. After all, the above-mentioned conventional user information-inputting/processing methods implemented in the digital mobile station do not allow such diverse types of user information required by diverse people of strong personality to be inputted and processed appropriately. There is therefore a need in the art for diverse types of user information inputting and processing methods such as the inputting and processing of the writing information or picture information indicative of a user's individualities, as users using the digital mobile station increase sharply in number.

US 5,838,302 discloses a data inputting device for inputting handwritten data. Distinct letters may be input which are drawn using lines. Co-ordinates are stored.

EP 0 762 265 A2 discloses a co-ordinate input device and method.

EP 0 738 951 A1 discloses a data processing method and apparatus to input and output trace data.

US 5,404,458 describes a method and apparatus for distinguishing between different types of input signals simulated by a pointing device coupled to a multi-tasking computer system.

WO 95/25326 A1 discloses a voice and pointer operated system.

WO 98/53389 A1 describes a touch screen input device for adaptive assembling of a touch screen input.

### SUMMARY OF THE INVENTION

It is the object of the invention to provide a method and device for inputting and processing a variety of user information including writing information written by or picture information drawn by the user in person, which can represent an inherent feature of the user himself in the digital mobile station.

This object is solved by the invention as claimed in the independent claims.

Preferred embodiments are defined in the dependent claims.

It is an aspect of the invention to provide a method of processing a variety of user information inputted through a touch screen panel after applying the touch screen panel used as object-oriented user information input means to the digital mobile station.

It is still another aspect of the invention to provide a method of processing a variety of user information like a written memo inputted through the touch screen panel while performing a usual original function such as a telephone conversation and a call incoming implemented and operated in the digital mobile station.

It is still another aspect of the invention to provide a method of inputting and processing a variety of user information required by users while overcoming a limited implementation environment, i.e. a limitation in capacity of an information storing memory of the digital mobile station and a limitation in information processing performance of a main control section thereof.

Accordingly, there is provided a method of inputting and processing a variety of user information for a digital mobile station including a touch screen panel and a control section for processing touch screen panel data generated from the touch screen panel comprising the steps of;
(a) counting continuously a predetermined period of time in response to a written memo input mode;
(b) detecting touch screen panel data generated from the touch screen panel corresponding to the continuous counting of the predetermined period of time, producing and storing an associated written memo corresponding to the detected touch screen panel data; and
(c) determining whether or not there is detection of another touch screen panel data generated according to the continuous counting operation for the predetermined period of time after a lapses of a certain period of time if there is no detection of the touch screen panel data for the predetermined period of time, storing detected another touch screen panel data if it is determined that there is detection of another touch screen panel data, and then performing again the step (a).

According to another aspect of the present invention, there is also provided a method of inputting and processing a variety of user information for a digital mobile station including a touch screen panel and a control section for processing touch screen panel data generated from the touch screen panel comprising the steps of;
(a) setting an operation mode to a written memo input mode;
(b) determining whether or not a predetermined period of time has lapsed in response to the written memo input mode;
(c) determining whether or not there is generated touch screen panel data if the predetermined period of time has lapsed;
(d) determining whether or not the generated touch screen panel data is touch screen panel data generated corresponding to an input of a start point if the touch screen panel data is generated at the step (c);
(e) displaying the generated touch screen panel data generated corresponding to the input of the start point if the generated touch screen panel data is the touch screen panel data generated corresponding to the input of the start point at the step (d); and
(f) producing and displaying an associated written memo from touch screen panel data generated corresponding to an input of continuous lines following the input of the start point if the generated touch screen panel data is the touch screen panel data generated corresponding to the input of continuous lines following the input of the start point, but not generated corresponding to the input of the start point.

### BRIEF DESCRIPTION OF THE DRAWINGS

The foregoing and other objects, features and advantages of the present invention will become more apparent from the following detailed description when taken in conjunction with the accompanying drawings in which:
Fig. 1 is a schematic block diagram illustrating the construction of a digital mobile station for processing a variety of user information inputted through a touch screen panel applied thereto according to a preferred embodiment of the present invention;
Fig. 2 is a flowchart illustrating the process of implementing the processing operation of a written memo as user information inputted through the touch screen panel for the digital mobile station according to a preferred embodiment of the present invention; and
Fig. 3 is a schematic view illustrating a screen displaying state of the touch screen panel of the digital mobile station, which can be represented as results generated according to a preferred embodiment of the present invention.

### DETAILED DESCRIPTION OF THE PREFERRED EMBODIMENT

Reference will now be made in greater detail to the preferred embodiments of the present invention. In the drawings, the same or similar elements are denoted by the same reference numerals even though they are depicted in different drawings. In the following description of the present invention, numerous specific details, such as concrete circuit constituting elements, are set forth to provide a more thorough understanding of the present invention. It will be apparent, however, to those skilled in the art that the invention may be practiced otherwise than according to the previously mentioned specific details. The detailed description of known functions and configurations incorporated herein will be omitted when it may make the subject matter of the present invention rather unclear.

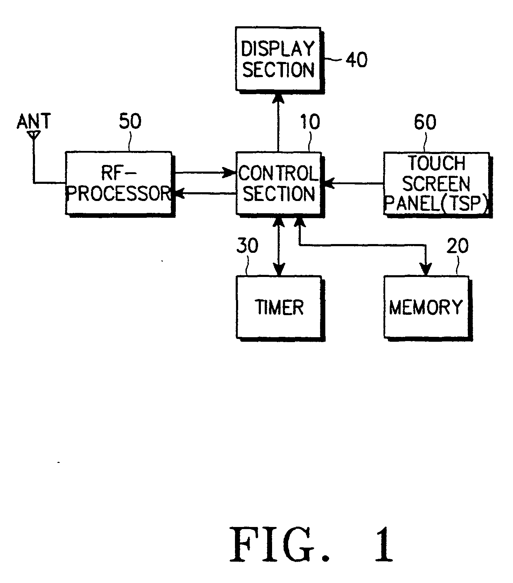

Fig. 1 is a schematic block diagram illustrating the construction of a digital mobile station for processing a variety of user information inputted through a touch screen panel applied thereto according to a preferred embodiment of the present invention.

Referring to Fig. 1, a digital mobile station of the present invention comprises a touch screen panel 60 used as object-oriented user information input means in a typical digital mobile station and a control section 10 for processing touch screen panel data generated from the touch screen panel. The touch screen panel 60 is employed as a touch screen panel known and used previously in the art. Especially, in the construction of the digital mobile station as shown in Fig. 1, the essential elements of the typical mobile station such as a dual tone multi-frequency (DTMF) section, a vocoder, etc., are not directly related to the subject matter of the present invention, and detailed explanation thereof will be omitted. However, such construction should be essentially provided in performing the digital mobile station of the present invention.

Now, the construction and operation of the digital mobile station to which the present invention is applied will be described in detail hereinafter with reference to Fig.1.

The control section 10 controls the overall operation of the digital mobile station, and recognizes touch screen panel data applied through the touch screen panel 60 and executes an associated processing operation according to the recognition of the touch screen panel data in the embodiment of the present invention. The control section 10 is typically implemented by a one-chip microprocessor. The digital mobile station employs "Mobile Station Modem (MSM)" manufactured and placed on the market by Qualcomm Co. located in the U.S. as the control section applied thereto. The preferred embodiment of the present invention is also implemented by the MSM. However, it should be understood that a control section manufactured by another manufacturer might be applied to the digital mobile station other than the MSM according to intention and application of a person performing the present invention. The control section 10 recognizes touch screen panel data inputted through the touch screen panel 60 and performs the operation for reading an associated coordinate value corresponding to a point where the touch screen panel data is inputted. The read coordinate value determines a position where user information inputted on a display section 40 is displayed. The touch screen panel 60, which is object-oriented user information input means, generates data corresponding to a depression of a certain region of a screen thereof for application to the control section 10 when a user exerts pressure on the certain region of the screen thereof by hand or a writing tool. A typical key panel or key input section generates only key data corresponding to the keying-in or the depression of an associated key whereas the touch screen panel 60 generates data according to pressure exerted on the screen by the user and touch screen panel data according to an associated coordinate value corresponding to a point where the pressure is exerted for application to the control section 10. Accordingly, the typical key panel generates only predetermined key data, but the touch screen panel 60 generates a variety of touch screen panel data according to an associated point where the data is inputted.

A memory 20 includes a volatile memory (for example, RAM) and a nonvolatile memory (for example, a flash memory, EEPROM), and performs the storage of a program for controlling the overall operation of the digital mobile station, the storage of initial service data, the storage of an operation program for processing touch screen panel data generated from the touch screen panel 60 and applied to the control section 10, and the storage of data produced according to the performance of the operation program according to the embodiment of the present invention. The memory 20 also performs a buffer function for temporarily storing processed data and necessary data. Particularly, the memory 20 stores a written memo as user information inputted through the touch screen panel 60 in the embodiment of the present invention. The type and size of the stored written memo data depend on a capacity of the memory imbedded in the digital mobile station to which the present invention is applied or processing capabilities of the control section 10.

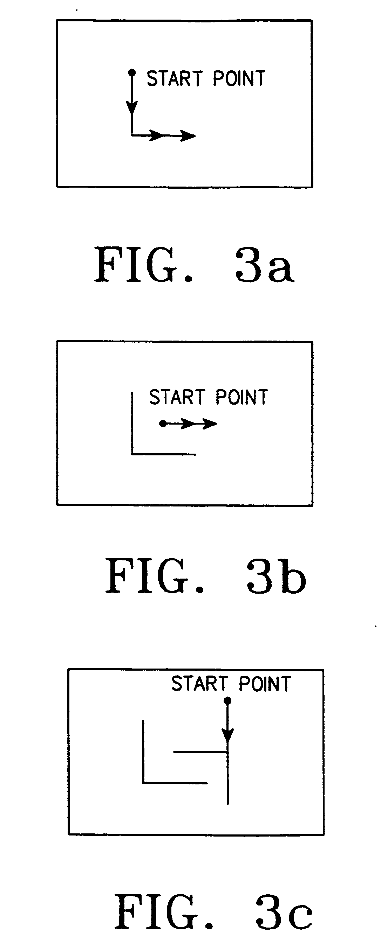

A display section 40 is a user interface device for displaying the whole state of the digital mobile station and user information inputted through the touch screen panel 60 so that the user can visually identify them, and is typically implemented by a liquid crystal display (LCD) driven under the control of the control section 10. In the embodiment of the present invention, user input information displayed on the display section 40 under the control of the control section 10 may be user input information inputted through the touch screen panel 60 besides information inputted through a key input section, i.e. a key panel. That is, the display section 40 may display a written memo or picture information inputted by a user's hand as it is on a screen thereof. In the meantime, a screen display state of the display section 40 according to a preferred embodiment of the present invention is shown in Fig. 3a to 3c.

An RF (radio signal) processing section 50 performs the whole processing of the radio signal transmission and reception between the digital mobile station and the base station to which the digital mobile station belongs. Specifically, the RF processing section 50 converts an input audio signal of a radio frequency band to an intermediate frequency (IF) signal, converts the IF signal to a baseband signal, and then converts the baseband signal to a digital signal. Also, in sending the audio signal, the RF processing section 50 performs an operation opposite to that described above.

A timer 30 performs the counting of a predetermined period of time under the control of the control section 10 after producing the predetermined period of time. In the embodiment of the present invention, a suitable period of time required for processing data applied from the touch screen panel 60 even without interfering functions designated basically in the digital mobile station when the control section 10 performs the functions is determined as the predetermined period of time. Namely, the control section 10 uses a fixed period of time in performing several functions, but the amount of time separately assigned to recognize and process data applied from the touch screen panel 60 irrespective of the performance of several functions is the predetermined period of time in the embodiment of the present invention. This may be called a sampling time of the touch screen panel 60 in another viewpoint. To briefly describe the operation of the timer 30, the timer 30 counts continuously the predetermined period of time by the above standard, and the touch screen panel data generated from the touch screen panel 60 corresponding to the continuous counting of the predetermined period of time is applied to the control section 10 which processes the touch screen panel data. This data recognizing method may be referred to as a polling method. In consequence, the control section 10 recognizes and processes the touch screen panel data applied from the touch screen panel 60 according to the counting of the predetermined period of time. As mentioned above, the predetermined period of time will be determined according to an inherent characteristic of the control section 10. In a case where the embodiment of the present invention is implemented by the SMS, the predetermined period of time will be determined to 20 msec or so. The 20 msec is a minimum amount of time determined within a range in which other functions performed in the MSM are not interfered.

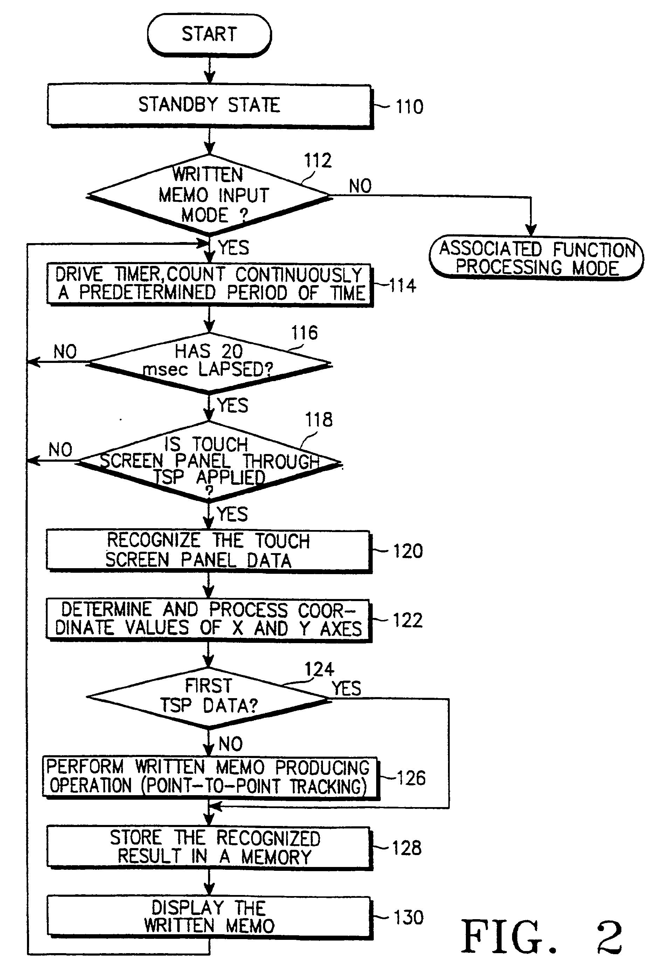

Fig. 2 is a flowchart illustrating the process of implementing the processing operation of a written memo as user information inputted through the touch screen panel for the digital mobile station according to a preferred embodiment of the present invention.

Referring to FIG. 2, the inputting and processing of user information according to a preferred embodiment of the present invention will be explained in detail.

First, at step 110, the digital mobile station performs a standby state. At this point, the digital mobile station performs a standby of a call incoming and the operation of a state in which separate additional functions besides the call incoming standby is not performed. It is determined at subsequent step 112 whether or not the operation mode according to the embodiment of the present invention is set to a written memo input mode. The input of the written memo may be performed through the keying-in operation of a typical key panel as a key input section, and may be performed through voice recognition or an input operation on the touch screen panel 60. If it is determined at step 112 that the operation mode is set to the written memo input mode, the program proceeds to step 114 in which the control section 10 allows the timer 30 to be driven. Then, the timer 30 performs continuously the counting of a predetermined period of time. At subsequent step 116, it is determined whether or not the predetermined period of time, i.e. 20 msec according to a standard of the MSM in a preferred embodiment of the present invention has lapsed. If it is determined at step 116 that 20 msec has lapsed, the program proceeds to step 118 where the control section 10 determines whether or not touch screen panel data generated from the touch screen panel 60 is applied thereto, i.e. whether or not a user inputs user information through the touch screen panel 60. If it is determined at step 118 that touch screen panel data is applied through the touch screen panel 60, the program proceeds to step 120 where the control section 10 performs the recognizing of the touch screen panel data. This recognizing operation enables determination on whether or not which type of touch screen panel data is inputted to the touch screen panel (TSP) 60. Then, at step 122, the control section 10 determines coordinate values of X and Y axes on a screen of the touch screen panel 60 from the applied touch screen panel data and processes the determined coordinate values accordingly. Subsequently, at step 124, it is determined whether or not the applied touch screen panel data is data generated corresponding to user information inputted firstly. This determination will be explained through a display state as shown in Figs. 3a to 3c. In a case where a user inputs a start point while inputting a desired character with a line as shown in Fig. 3a, touch screen panel data generated according to the input of the start point and the desired character is detected continuously corresponding to the above-mentioned 20 msec. The purpose of the determination in the step 124 is to distinguish touch screen panel data generated according to the input of the start point from touch screen panel data generated according to an input of continuous lines following the input of the start point. That is, the touch screen panel data generated according to the input of the start point is the firstly inputted user information data. The reason why the determination operation is necessary is that a written memo producing operation implemented in the embodiment of the present invention is required for processing, as one continuous line, each of touch screen panel data generated corresponding to the predetermined period of time of 20 msec. That is, the written memo producing operation is not necessary for the firstly inputted user information data, i.e. the touch screen panel data generated according to the input of the start point, meanwhile the touch screen panel data generated according to the input of continuous lines, but not the firstly inputted user information data, i.e. following the input of the start point should be processed as one line to process inputted user information. In other words, as can be seen from Figs. 3a to 3c, the touch screen panel data generated according to the input of the start point is processed after determining whether or not the touch screen panel data is generated and recognizing a coordinate value of the touch screen panel data, but user information inputted continuously following the input of the start point represents a line, so that another data processing operation should be performed to recognize correct user input information. The reason for this is because in the embodiment of the present invention the control section 10 performs the recognition of the touch screen panel data through the counting of the predetermined period of time of 20 msec, and this is an operation required for recognizing, as a line, the touch screen panel data generated every 20 msec. For reference, this operation is called a point-to-point tracking method in which several points forms a line in such a fashion that when there is a point and another point, the points are connected by a line. The present invention employs a method which produces a continuous line through the touch screen panel data generated and sensed every 20 msec. Whether or not the method is implemented depends on the determination operation in the step 124. Meanwhile, several methods known and used previously as method for performing this have been proposed and implemented. In the embodiment of the present invention, a method conforming to an inherent characteristic of the digital mobile station will be applied. Accordingly, if it is determined at step 124 that the applied touch screen panel data is data generated corresponding to user information inputted firstly, i.e. firstly inputted touch screen panel data, the program proceeds to step 128 where the control section 10 allows the recognized result to be stored in a buffer of the memory 20. If, on the other hand, it is determined at step 124 that the applied touch screen panel data is not the firstly inputted touch screen panel data, the program proceeds to step 126 where the control section 10 performs the above written memo producing operation, and then allows the result according to the performance of the written memo producing operation to be stored in the buffer of the memory 20. At subsequent step 130, the recognized result data stored in the step 128 is displayed on a screen of the display section 40.

Fig. 3 is a schematic view illustrating a screen displaying state of the touch screen panel of the digital mobile station, which can be represented as results generated according to a preferred embodiment of the present invention.

Referring to Fig. 3, there is shown a state where a user inputs " 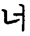 " of a character in Korean alphabet as user information through the touch screen panel 60 and the inputting and processing of the user information are performed through the states of Fig.3a, Fig.3b, and Fig. 3c arranged in order. These inputting and processing operations are carried out according to the process routine of Fig. 2 previously mentioned.

As described above, the inputted user information processing method of the present invention has an advantage in that it allows for the substantial inputting and processing of writing information written by, picture information drawn by a user in person, etc. which a user desires to input and process according to diverse demands of user in the digital mobile station. In addition, a user can input and process a diversity of information required by the user through the touch screen panel as another user information-input means by using suitably several constraints that the digital mobile station has. Consequently, the method of the present invention enables the inputting and processing of diverse information including the writing information, the picture information, etc. in the digital mobile station according to the embodiment of the present invention, thereby improving a convenience of a user.

While this invention has been described in connection with what is presently considered to be the most practical and preferred embodiment, it is to be understood that the invention is not limited to the disclosed embodiment, but, on the contrary, it is intended to cover various modifications within the scope of the appended claims.

## Claims

1. A method of inputting, in a memo input mode, a written memo to a digital mobile station through a touch screen panel (60) of said digital mobile station, said digital mobile station comprising a control section (10) to process touch screen panel data, the method comprising the steps of:
determining (118) whether or not the touch screen panel has been touched and, if so, generating (120, 122) corresponding touch screen panel data indicating coordinate values;
determining (124) whether or not the generated touch screen panel data corresponds to a start point;
if it is determined that the generated touch screen panel data corresponds to a start point, displaying (130) the start point; and
if not, performing (126) point-to-point tracking thereby generating a line from the previous co-ordinates to the present co-ordinates, and displaying (130) the generated line,
wherein the method further comprises:
prior to determining (118) whether or not the touch screen panel has been touched, and in response to determining (112) that an operation mode of said digital mobile station is set to a written memo input mode, continuously counting (114) a predetermined period of time, said predetermined period of time having been determined according to an inherent characteristic of the control section of said digital mobile station;
determining (116) whether or not said predetermined period of time has lapsed; and
if it is determined that that said predetermined period of time has lapsed, performing the step of determining (118) whether or not the touch screen panel has been touched, wherein said step of performing (126) point-to-point tracking comprises recognizing as a line the touch screen panel data generated and sensed every said predetermined period of time.

2. The method according to claim 1, wherein the steps of determining (114, 116, 118, 124) and performing (126) point-to-point tracking are repeated until said written memo is completed.

3. The method according to claim 2, wherein said written memo comprises a plurality of independent lines.

4. The method according to one of claims 1 to 3, wherein said written memo comprises letters.

5. The method according to one of claims 1 to 4, wherein said written memo comprises a picture.

6. The method according to one of claims 1 to 5, further comprising the step of entering said memo input mode upon voice detection.

7. The method according to one of claims 1 to 6, further comprising the step of entering said memo input mode when the user touches said touch screen panel.

8. The method according to one of claims 1 to 7, wherein said predetermined period of time is the required touch screen panel sampling time.

9. Digital mobile station comprising a touch screen panel (60), arranged for performing the method according to one of claims 1 to 8.

## Patentansprüche

1. Verfahren zum Eingeben einer schriftlichen Notiz in eine digitale Mobilstation über einen berührungsempfindlichen Bildschirm (60) der digitalen Mobilstation in einem Notiz-Eingabemodus, wobei die digitale Mobilstation einen Steuerabschnitt (10) zum Verarbeiten von Daten des berührungsempfindlichen Bildschirms umfasst und das Verfahren die folgenden Schritte umfasst:
Feststellen (118), ob der berührungsempfindliche Bildschirm berührt worden ist oder nicht, und wenn dies der Fall ist, Erzeugen (120, 122) entsprechender Daten des berührungsempfindlichen Bildschirms, die Koordinatenwerte anzeigen;
Feststellen (124), ob die erzeugten Daten des berührungsempfindlichen Bildschirms einem Anfangspunkt entsprechen oder nicht;
wenn festgestellt wird, dass die erzeugten Daten des berührungsempfindlichen Bildschirms einem Anfangspunkt entsprechen, Anzeigen (130) des Anfangspunktes; und
wenn dies nicht der Fall ist, Durchführen (126) von Punkt-zu-Punkt-Nachführung, um so eine Linie von den vorhergehenden Koordinaten zu den aktuellen Koordinaten zu erzeugen, und Anzeigen (130) der erzeugten Linie,
wobei das Verfahren des Weiteren umfasst:
kontinuierliches Zählen (114) eines vorgegebenen Zeitraums, bevor festgestellt wird (118), ob der berührungsempfindliche Bildschirm berührt worden ist oder nicht, und in Reaktion darauf, dass festgestellt wird (112), dass ein Funktionsmodus der digitalen mobilen Station auf einen Modus zum Eingeben einer schriftlichen Notiz eingestellt ist, wobei der vorgegebene Zeitraum entsprechend einer inhärenten Charakteristik des Steuerabschnitts der digitalen Mobilstation bestimmt worden ist;
Feststellen (116), ob der vorgegebene Zeitraum abgelaufen ist oder nicht; und
Durchführen des Schrittes, in dem festgestellt wird (118), ob der berührungsempfindliche Bildschirm berührt worden ist oder nicht, wenn festgestellt wird, dass der vorgegebene Zeitraum abgelaufen ist, wobei der Schritt des Durchführens (126) von Punkt-zu-Punkt-Nachführung umfasst, dass die jeweils in dem vorgegebenen Zeitraum erzeugten und erfassten Daten des berührungsempfindlichen Bildschirms als eine Linie erkannt werden.

2. Verfahren nach Anspruch 1, wobei die Schritte des Feststellens (114, 116, 118, 124) und des Durchführens (126) von Punkt-zu-Punkt-Nachführung wiederholt werden, bis die schriftliche Notiz fertig gestellt ist.

3. Verfahren nach Anspruch 2, wobei die schriftliche Notiz eine Vielzahl unabhängiger Linien umfasst.

4. Verfahren nach einem der Ansprüche 1 bis 3, wobei die schriftliche Notiz Buchstaben umfasst.

5. Verfahren nach einem der Ansprüche 1 bis 4, wobei die schriftliche Notiz ein Bild umfasst.

6. Verfahren nach einem der Ansprüche 1 bis 5, das des Weiteren den Schritt umfasst, in dem auf Spracherfassung hin in den Notizeingabe-Modus eingetreten wird.

7. Verfahren nach einem der Ansprüche 1 bis 6, das des Weiteren den Schritt umfasst, in dem in den Notizeingabe-Modus eingetreten wird, wenn der Benutzer den berührungsempfindlichen Bildschirm berührt.

8. Verfahren nach einem der Ansprüche 1 bis 7, wobei der vorgegebene Zeitraum die erforderliche Abtastzeit des berührungsempfindlichen Bildschirms ist.

9. Digitale Mobilstation, die einen berührungsempfindlichen Bildschirm (60) umfasst und zum Durchführen des Verfahrens nach einem der Ansprüche 1 bis 8 eingerichtet ist.

## Revendications

1. Procédé d'entrée, dans un mode d'entrée de mémorandum, d'un mémorandum écrit dans un terminal numérique mobile par l'intermédiaire d'un écran tactile (60) dudit terminal numérique mobile, ledit terminal numérique mobile comprenant une section de commande (10) pour traiter les données de l'écran tactile, le procédé comprenant les étapes consistant à :
déterminer (118) si l'écran tactile a été touché ou non et dans l'affirmative, générer (120, 122) les données correspondantes de l'écran tactile indiquant des valeurs de coordonnées ;
déterminer (124) si les données générées par l'écran tactile correspondent ou non à un point de départ ;
si l'on a déterminé que les données générées par l'écran tactile correspondent à un point de départ, afficher (130) le point de départ ; et
sinon, effectuer (126) un suivi point à point de façon à générer une ligne allant des coordonnées précédentes aux coordonnées actuelles, et afficher (130) la ligne générée,
dans lequel le procédé comprend en outre :
avant la détermination (118) du fait que l'écran tactile a été touché ou non et en réponse à la détermination (112) du fait que le mode de fonctionnement dudit terminal numérique mobile est réglé à un mode d'entrée de mémorandum, compter en continu (114) une période de temps prédéterminée, ladite période de temps prédéterminée ayant été déterminée en fonction d'une caractéristique intrinsèque de la section de commande dudit terminal numérique mobile ;
déterminer (116) si ladite période de temps prédéterminée s'est écoulée ou non ; et
si l'on a déterminé que ladite période de temps prédéterminée s'est écoulée, exécuter l'étape de détermination (118) du fait que l'écran tactile a été touché ou non, dans lequel ladite étape d'exécution (126) du suivi point à point comprend la reconnaissance en tant que ligne des données de l'écran tactile générées et détectées, chaque dite période de temps prédéterminée.

2. Procédé selon la revendication 1, dans lequel les étapes de détermination (114, 116, 118, 124) et d'exécution (126) d'un suivi point à point sont répétées jusqu'à ce que ledit mémorandum écrit soit terminé.

3. Procédé selon la revendication 2, dans lequel ledit mémorandum écrit comprend une pluralité de lignes indépendantes.

4. Procédé selon l'une des revendications 1 à 3, dans lequel ledit mémorandum écrit comprend des lettres.

5. Procédé selon l'une des revendications 1 à 4, dans lequel ledit mémorandum écrit comprend une image.

6. Procédé selon l'une des revendications 1 à 5, comprenant en outre l'étape consistant à entrer dans ledit mode d'entrée de mémorandum par détection vocale.

7. Procédé selon l'une des revendications 1 à 6, comprenant en outre l'étape consistant à entrer dans ledit mode d'entrée de mémorandum lorsque l'utilisateur touche ledit écran tactile.

8. Procédé selon l'une des revendications 1 à 7, dans lequel ladite période de temps prédéterminée est la période d'échantillonnage requise de l'écran tactile.

9. Terminal numérique mobile comprenant un écran tactile (60), agencé pour exécuter le procédé selon l'une des revendications 1 à 8.
